# EUROPÄISCHE PATENTANMELDUNG

(11) **EP 3 760 357 A1**
(43) Veröffentlichungstag der Anmeldung: **06.01.2021**
(21) Anmeldenummer: 19184601.3
(22) Anmeldetag: 05.07.2019
(51) Int. Cl.: B23K 9/095, B23K 9/32

(54) **SYSTEM UND VERFAHREN ZUR BESTIMMUNG EINER SCHWEISS- ODER LÖTGESCHWINDIGKEIT**

(71) Anmelder: EWM AG, 56271 Mündersbach (DE)
(72) Erfinder: Szczesny, Michael, 56271 Mündersbach (DE)
(74) Vertreter: Cohausz & Florack

(57) **Zusammenfassung**

Die Erfindung betrifft ein System (2) zur Bestimmung einer Schweiß- oder Lötgeschwindigkeit, mit einer Detektionseinrichtung (6), eingerichtet zur Montage an oder zur Integration in ein Gerät (4), insbesondere Handgerät, zum Schweißen oder Löten, wobei die Detektionseinrichtung (6) ein Stereokamerasystem (8) umfasst, das zum Erfassen stereoskopischer Bilder (50, 52) von einer Werkstückoberfläche (18a-b) eingerichtet ist, und mit einer Berechnungseinrichtung (26), die dazu eingerichtet ist, aus den erfassten stereoskopischen Bildern (50, 52) eine Schweiß- oder Lötgeschwindigkeit zu bestimmen. Weiter betrifft die Erfindung ein Verfahren zur Bestimmung einer Schweiß- oder Lötgeschwindigkeit, bei dem, während mit einem Gerät (4) zum Schweißen oder Löten ein Schweiß- oder Lötvorgang an einem Werkstück (20a-b) durchgeführt wird, von einem ortsfest zum Gerät (4) zum Schweißen oder Löten angeordneten Stereokamerasystem (8) stereoskopische Bilder (50, 52) von einer Werkstückoberfläche (18a-b) des Werkstücks (20a-b) erfasst werden und bei dem aus den erfassten stereoskopischen Bildern (50, 52) eine Schweiß- oder Lötgeschwindigkeit berechnet wird

## Beschreibung

Die Erfindung betrifft ein System und ein Verfahren zur Bestimmung einer Schweiß-oder Lötgeschwindigkeit.

Bei nicht automatisierten Schweiß- oder Lötprozessen ist die Einhaltung der Schweiß- bzw. Lötgeschwindigkeit in der Regel besonders kritisch für die Qualität des Prozesses. Im Folgenden bezieht sich die Beschreibung der Einfachheit halber auf Schweißprozesse, gilt jedoch für Lötprozesse entsprechend. Bei automatisierten Schweißprozessen ist die Schweißgeschwindigkeit anhand des Verfahrwegs des Schweißkopfes bzw. der Erfassung der Relativbewegung des Werkstücks gegenüber dem Schweißkopf leicht nachvollziehbar, so dass man die Schweißgeschwindigkeit zum Beispiel zur Regelung des Schweißstroms und damit auch der Schweißqualität verwenden kann. Beim Handschweißen ist die Schweißgeschwindigkeit hingegen nicht ohne weiteres messbar, so dass sich die Streckenenergie (d.h. die eingebrachte Energie pro Strecke) E_{Str} = P/v, die durch die Leistung P und die Schweißgeschwindigkeit v bestimmt wird, nicht zufriedenstellend regeln lässt.

Es sind bereits verschiedene Ansätze bekannt, um die Schweißgeschwindigkeit zu bestimmen.

Beispielsweise wird in der DE 10 2007 036 505 A1 ein Verfahren beschrieben, bei dem der Schweißprozess mittels einer Kamera beobachtet wird und durch Auswertung der erfassten Bilddaten die Schweißgeschwindigkeit bestimmt wird. Dieses Verfahren erfordert jedoch eine ausreichend strukturierte Werkstückoberfläche oder die Anbringung von Markierungen auf den zu verbindenden Werkstücken.

Weiterhin ist aus der EP 1 077 784 B1 ein Verfahren bekannt, bei dem die Schweißgeschwindigkeit mittels Widerstandsbrücke bestimmt wird. Dieses Verfahren ist jedoch wegen der anzubringenden Messkontakte sehr aufwändig und erfordert wegen der großen Temperaturschwankungen während des Schweißprozesses eine sehr hohe Messgenauigkeit.

Weiterhin beschreibt DD 142 677 A1 ein Verfahren, mit dem die Relativbewegung eines Werkstücks gegenüber dem Schweißbrenner ermittelt werden kann. Dieses Messverfahren ist bei rein manuellen Schweißverfahren jedoch nicht anwendbar.

Vor diesem Hintergrund liegt der vorliegenden Erfindung die Aufgabe zu Grunde, ein System und ein Verfahren zur Verfügung zu stellen, mit denen sich die Schweiß- oder Lötgeschwindigkeit, insbesondere auch beim Handschweißen oder Handlöten, einfach und zuverlässig messen lässt.

Diese Aufgabe wird erfindungsgemäß gelöst durch ein System zur Bestimmung einer Schweiß- oder Lötgeschwindigkeit mit einer Detektionseinrichtung, eingerichtet zur Montage an oder zur Integration in ein Gerät, insbesondere Handgerät, zum Schweißen oder Löten, wobei die Detektionseinrichtung ein Stereokamerasystem umfasst, das zum Erfassen stereoskopischer Bilder von einer Werkstückoberfläche eingerichtet ist, und mit einer Berechnungseinrichtung, die dazu eingerichtet ist, aus den erfassten stereoskopischen Bildern eine Schweiß- oder Lötgeschwindigkeit zu bestimmen.

Es wurde erkannt, dass sich mit einem solchen System die Schweiß- oder Lötgeschwindigkeit bei einem Schweiß- bzw. Lötvorgang mit einem Gerät, insbesondere Handgerät, zum Schweißen bzw. Löten auf einfache Weise und zuverlässig messen lässt.

Entsprechend wird die oben genannte Aufgabe weiterhin gelöst durch die Verwendung des zuvor beschriebenen Systems zum Bestimmen einer Schweiß- oder Lötgeschwindigkeit.

Das System kann vorzugsweise beim Metallschutzgasschweißen (MSG-Schweißen), insbesondere Metallaktivgasschweißen (MAG-Schweißen) oder Metallinertgasschweißen (MIG-Schweißen), beim Wolfram-Inertgasschweißen (WIG-Schweißen oder auch beim Elektro- oder Plasmaschweißen verwendet werden.

Verfahrensmäßig wird die oben genannte Aufgabe weiterhin gelöst durch ein Verfahren zur Bestimmung einer Schweiß- oder Lötgeschwindigkeit, insbesondere unter Verwendung des zuvor beschriebenen Systems, bei dem, während mit einem Gerät zum Schweißen oder Löten ein Schweiß- oder Lötvorgang an einem Werkstück durchgeführt wird, von einem ortsfest zum Gerät zum Schweißen oder Löten angeordneten Stereokamerasystem stereoskopische Bilder von einer Werkstückoberfläche des Werkstücks erfasst werden und bei dem aus den erfassten stereoskopischen Bildern eine Schweiß- oder Lötgeschwindigkeit berechnet wird.

Das System und das Verfahren nutzen die Stereoskopie-Technik, um die Lage zwischen dem zum Schweißen oder Löten verwendeten Gerät und der Werkstückoberfläche sowie deren Veränderung zu bestimmen. Aus der Veränderung dieser Lage lässt sich zuverlässig die Schweiß- bzw. Lötgeschwindigkeit bestimmen.

Die Detektionseinrichtung umfasst ein Stereokamerasystem, das zum Erfassen stereoskopischer Bilder eingerichtet ist. Unter einem stereoskopischen Bild werden zwei einander zugeordnete, insbesondere zeitgleich aufgenommene Teilbilder aus verschiedenen Blickwinkeln verstanden. Die Teilbilder können in einem gemeinsamen Datensatz, insbesondere einem Bilddatensatz, oder auch separat voneinander gespeichert werden.

Durch die Auswertung der einander zugeordneten Teilbilder kann eine Tiefeninformationen über die in den Teilbildern erfassten Objekte gewonnen werden. Die Technik der Stereoskopie zur Gewinnung von Tiefeninformationen ist grundsätzlich bekannt, zum Beispiel aus dem Bereich der Robotik. Es wurde nun festgestellt, dass sich diese Technik besonders gut zur Bestimmung der Schweiß- bzw. Lötgeschwindigkeit einsetzen lässt. Insbesondere hat sich gezeigt, dass diese Technik gegenüber anderen, zum Beispiel laserbasierten Systemen unempfindlicher gegenüber Schweißrauch und dergleichen ist.

Durch die Tiefeninformation können insbesondere auch das Höhenprofil der zu schweißenden Werkstückoberfläche und der Abstand des Geräts zum Schweißen oder Löten zur Werkstückoberfläche erfasst werden. Dadurch lässt sich die Schweiß- oder Lötgeschwindigkeit besser bestimmen.

Das Stereokamerasystem kann insbesondere zwei separate Kameras mit einem jeweiligen Bildsensor und einer jeweiligen Optik aufweisen. Alternativ ist es denkbar, dass das Stereokamerasystem einen Bildsensor aufweist, auf den die beiden Teilbilder mittels einer Doppeloptik oder mittels zweier Optiken abgebildet werden.

Die optischen Achsen des Stereokamerasystems, insbesondere die optischen Achsen der vorzugsweise vorgesehenen zwei Kameras, laufen bevorzugt in einem Winkel zueinander. Auf diese Weise können auch geringe Tiefenunterschiede besser aufgelöst werden.

Das Erfassen stereoskopischer Bilder erfolgt vorzugsweise mehrfach nacheinander, insbesondere kontinuierlich.

Das System und das Verfahren dienen zur Bestimmung einer Schweiß- oder Lötgeschwindigkeit. Unter der Schweiß- oder Lötgeschwindigkeit wird insbesondere die Relativgeschwindigkeit zwischen dem zum Schweißen bzw. Löten verwendeten Gerät (z.B. Schweiß- oder Lötkopf), insbesondere Handgerät (z.B. Schweißbrenner oder Lötkolben), und der Werkstückoberfläche eines zu fügenden Werkstücks verstanden.

Entsprechend ist die Detektionseinrichtung zur Montage an ein Gerät, insbesondere Handgerät, zum Schweißen oder Löten oder zur Integration in ein Gerät, insbesondere Handgerät, zum Schweißen oder Löten eingerichtet. Beispielsweise kann die Detektionseinrichtung als Aufsatz für ein Gerät, insbesondere Handgerät, zum Schweißen oder Löten ausgebildet sein, mit der sich ein Gerät, insbesondere Handgerät, zum Schweißen oder Löten bei dessen Herstellung oder im Nachhinein ausrüsten lässt. Zu diesem Zweck kann die Detektionseinrichtung insbesondere Montagemittel zur Montage der Detektionseinrichtung an ein Gerät, insbesondere Handgerät, aufweisen. Weiterhin kann die Detektionseinrichtung auch direkt in das Gerät, insbesondere Handgerät, integriert sein, beispielsweise in den Griff des Handgeräts.

Unter einem Gerät zum Schweißen oder Löten wird insbesondere ein Schweiß- oder Lötkopf, wie zum Beispiel für einen Schweiß- oder Lötroboter, verstanden oder insbesondere ein Handgerät zum Schweißen oder Löten.

Ein Handgerät zum Schweißen oder Löten dient zur manuellen Durchführung eines Schweiß- oder Lötvorgangs, wobei das Handgerät von der Hand des Schweißers geführt wird. Unter einem Handgerät zum Schweißen wird insbesondere ein Schweißbrenner verstanden. Unter einem Handgerät zum Löten wird insbesondere ein Lötbrenner oder Lötkolben verstanden.

Die Berechnungseinrichtung des Systems kann ebenfalls an das Gerät, insbesondere Handgerät, montiert oder in das Gerät, insbesondere Handgerät, integriert sein. Insbesondere können die Berechnungseinrichtung und die Detektionseinrichtung als gemeinsame Einheit, beispielsweise in einem gemeinsamen Gehäuse, ausgebildet sein. Alternativ ist es aber auch denkbar, die Berechnungseinrichtung separat von der Detektionseinrichtung vorzusehen, beispielsweise integriert in eine Schweißkomponente, mit der das Gerät, insbesondere Handgerät, verbunden ist, wie zum Beispiel in eine Schweißstromquelle.

Wenn die Berechnungseinrichtung separat von der Detektionseinrichtung angeordnet ist, so ist insbesondere eine Kommunikationsverbindung, zum Beispiel eine Datenleitung, zwischen der Detektionseinrichtung und der Berechnungseinrichtung vorgesehen, um die von dem Stereokamerasystem erfassten stereoskopischen Bilder an die Berechnungseinrichtung zu übermitteln.

Im Folgenden werden verschiedene Ausführungsformen des Systems, der Verwendung und des Verfahrens beschrieben, wobei die einzelnen Ausführungsformen jeweils sowohl für das System, für dessen Verwendung sowie für das Verfahren gelten. Darüber hinaus können die Ausführungsformen untereinander kombiniert werden.

Bei einer Ausführungsform des Systems ist die Berechnungseinrichtung zur Bestimmung der Schweiß- oder Lötgeschwindigkeit dazu eingerichtet, 3D-Koordinaten aus den stereoskopischen Bildern zu berechnen, die Lage der Werkstückoberfläche zum Stereokamerasystem aus den 3D-Koordinaten zu bestimmen und die Schweiß- oder Lötgeschwindigkeit abhängig von der Änderung der bestimmten Lage der Werkstückoberfläche zum Stereokamerasystem zu berechnen. Bei einer entsprechenden Ausführungsform des Verfahrens umfasst das Berechnen der Schweiß- oder Lötgeschwindigkeit aus den erfassten stereoskopischen Bildern folgende Schritte:
- Berechnen von 3D-Koordinaten aus den stereoskopischen Bildern,
- Bestimmen der Lage der Werkstückoberfläche zum Stereokamerasystem aus den 3D-Koordinaten, und
- Berechnung der Schweiß- oder Lötgeschwindigkeit abhängig von der bestimmten Lage der Werkstückoberfläche.

Auf diese Weise lässt sich die Schweiß- oder Lötgeschwindigkeit zuverlässig aus den stereoskopischen Bildern bestimmen.

Bei der Berechnung der 3D-Koordinaten aus den stereoskopischen Bildern werden insbesondere die jeweiligen Teilbilder der einzelnen stereoskopischen Bilder miteinander verglichen, um einander entsprechende Bereiche in den Teilbildern zu identifizieren. Mit der bekannten Geometrie und Anordnung des Stereokamerasystems können eine Tiefeninformation der einander entsprechenden Bereiche und damit 3D-Koordinaten für diese Bereiche bestimmt werden. Die Verarbeitung der Teilbilder eines stereoskopischen Bilds zu 3D-Koordinaten, insbesondere mittels sogenannter Stereo-Matching-Algorithmen ist grundsätzlich bekannt, zum Beispiel aus M. Bleyer et al. (2013), "Stereo Matching-State-of-the-Art and Research Challenges" in "Advanced Topics in Computer Vision", ISBN 978-1-4471-5519-5, und muss daher an dieser Stelle nicht näher erläutert werden.

Aus den 3D-Koordinaten wird die Lage der Werkstückoberfläche zum Stereokamerasystem bestimmt. Zu diesem Zweck kann insbesondere eine fiktive Werkstückoberflächen-Ebene an die berechneten 3D-Koordinaten angefittet werden. Auf diese Weise lassen sich zur Werkstückoberflächen-Ebene gehörige Bildbereiche in den Bildern identifizieren, anhand derer die Lage des Stereokamerasystems bzw. des Geräts zum Schweißen oder Löten zur Werkstückoberfläche sowie deren Änderung verfolgt werden können.

Zur Bestimmung der Ausrichtung des Stereokamerasystems bzw. des Geräts zum Schweißen oder Löten zur Werkstückoberfläche kann insbesondere der Winkel der fiktiven Werkstückoberflächen-Ebene zu einer bekannten Ebene des Stereokamerasystems, insbesondere einer Kameraebene (bzw. Bildebene) einer der Kameras des Stereokamerasystems oder eine mittlere Kameraebene beider Kameras, bestimmt werden. Dadurch lassen sich die 3D-Koordinaten genauer in tatsächliche Abstände umrechnen. Weiterhin kann auf diese Weise die Ausrichtung des Geräts zum Schweißen oder Löten zur Werkstückoberfläche verfolgt und ggf. überwacht werden.

Die Schweiß- oder Lötgeschwindigkeit lässt sich aus der Veränderung der bestimmten Lage der Werkstückoberfläche zum Stereokamerasystem in nacheinander erfassten stereoskopischen Bildern berechnen. Beispielsweise kann aus 10 oder mehr, vorzugsweise 20 oder mehr aufeinanderfolgenden stereoskopischen Bildern die jeweilige Lage der Werkstückoberfläche zum Stereokamerasystem bestimmt und aus der Änderung der Lage die Schweiß- oder Lötgeschwindigkeit berechnet werden.

Zu diesem Zweck können in den Bildern insbesondere geeignete Bildbereiche ausgewählt werden, insbesondere Bildbereiche mit einer markanten Struktur, die sich in den einzelnen stereoskopischen Bildern, insbesondere in den einzelnen Teilbildern der stereoskopischen Bilder, gut wiedererkennen und verfolgen lassen. Die Auswahl der Bildbereiche erfolgt vorzugsweise abhängig von der fiktiven Werkstückoberflächen-Ebene. Auf diese Weise lassen sich auf einfache Weise Bildbereiche mit Pixeln auswählen, die der fiktiven Werkstückoberfläche zugeordnet sind, d.h. Pixel, die zum Abbild der Werkstückoberfläche gehören, deren Lage im Bild durch die fiktive Werkstückoberfläche bestimmt wird. Über die Bewegung der zum Abbild der Werkstückoberfläche gehörigen Bildbereiche lässt sich die Schweiß- bzw. Lötgeschwindigkeit sehr genau ermitteln.

Bei einer entsprechenden Ausführungsform umfasst das Verfahren zur Bestimmung einer Schweiß- oder Lötgeschwindigkeit insbesondere folgende Schritte:
- Erfassen mehrerer aufeinanderfolgender stereoskopischer Bilder, vorzugsweise mindestens 10,
- Bestimmung einander entsprechender Bereiche in den Teilbildern der einzelnen stereoskopischen Bilder zur Berechnung von 3D-Koordinaten und Berechnung der 3D-Koordinaten,
- Bestimmung einer fiktiven Werkstückoberflächen-Ebene mit den berechneten 3D-Koordinaten, vorzugsweise Bestimmung des Winkels zwischen fiktiver Werkstückoberflächen-Ebene und Kameraebene, und
- Auswahl von Bildbereichen, deren Pixel der fiktiven Werkstückoberflächen-Ebene zugeordnet sind,
- Bestimmung der Schweiß- oder Lötgeschwindigkeit aus der Positionsänderung der 3D-Koordinaten der ausgewählten Bereiche.

Bei einer weiteren Ausführungsform weist die Detektionseinrichtung eine Beleuchtungseinrichtung auf, die zur Beleuchtung einer Werkstückoberfläche mit Licht eingerichtet ist. Auf diese Weise wird eine ausreichende Beleuchtung der Werkstückoberfläche zum Erfassen der stereoskopischen Bilder sichergestellt, und zwar insbesondere auch dann, wenn der Lichtbogen eines Geräts zum Schweißen, insbesondere Schweißbrenner, zur Beleuchtung nicht ausreichend hell ist, beispielsweise bei geringem Schweißstrom.

Bei einer weiteren Ausführungsform weist die Detektionseinrichtung einen vor dem Stereokamerasystem angeordneten oder in das Stereokamerasystem integrierten Wellenlängenfilter auf, insbesondere einen Interferenzfilter. Ein solcher Wellenlängenfilter lässt vorzugsweise einen bestimmten Wellenlängenbereich passieren, während angrenzende Wellenlängenbereiche abgeblockt werden.

Mit einem solchen Wellenlängenfilter kann bei einem Gerät zum Schweißen, insbesondere Handbrenner, die Intensität des vom Stereokamerasystem erfassten Lichts vom Schweißlichtbogen abgeschwächt werden, so dass die Werkstückoberfläche besser erfasst werden kann. Zu diesem Zweck wird der Wellenlängenfilter vorzugsweise so gewählt, dass der Wellenlängenfilter das Licht in einem Wellenlängenbereich passieren lässt, in dem das Schweißlichtbogen-Licht ein Minimum aufweist.

Bei einer weiteren Ausführungsform weist das Stereokamerasystem eine Autofokus-Automatik auf. Auf diese Weise kann eine scharfe Abbildung der stereoskopischen Bilder von der Werkstückoberfläche erreicht werden.

Bei einer weiteren Ausführungsform ist die Berechnungseinrichtung dazu eingerichtet, aus den erfassten stereoskopischen Bildern einen Abstand zu einer Werkstückoberfläche zu bestimmen und die Autofokus-Automatik ist dazu eingerichtet, den Fokus abhängig vom bestimmten Abstand einzustellen. Da sich aus den erfassten stereoskopischen Bildern der Abstand zur Werkstückoberfläche bestimmen lässt, kann dieser Abstand in vorteilhafter Weise zur Steuerung des Autofokus verwendet werden, sodass zum Beispiel auf andere Autofokustechniken (Kantenkontrastmessung, Phasenvergleich oder aktive Entfernungsmessung) verzichtet oder deren Genauigkeit erhöht werden kann.

Bei einer weiteren Ausführungsform umfasst das System weiter ein Gerät, insbesondere Handgerät, zum Schweißen oder Löten, wobei die Detektionseinrichtung an dem Gerät montiert oder in dieses integriert ist. Durch die Kopplung von Detektionseinrichtung und Gerät, insbesondere Handgerät, kann die Schweiß- bzw. Lötgeschwindigkeit bei einem mit dem Gerät durchgeführten Schweiß- bzw. Lötvorgang bestimmt werden. Bei dem Handgerät kann es sich insbesondere um einen Schweißbrenner oder einen Lötkolben handeln.

Bei einer weiteren Ausführungsform weist die Detektionseinrichtung ein Abschirmelement auf, das zur Abschirmung des Lichts eines von dem Gerät zum Schweißen oder Löten erzeugten Lichtbogens angeordnet und ausgebildet ist. Auf diese Weise kann verhindert werden, dass das grelle Licht des Lichtbogens das Erfassen stereoskopischer Bilder von der Werkstückoberfläche stört.

Bei einer weiteren Ausführungsform umfasst das System eine Steuereinrichtung, die zur Steuerung eines Schweiß- oder Lötvorgangs abhängig von der bestimmten Schweiß- oder Lötgeschwindigkeit eingerichtet ist. Bei einer entsprechenden Ausführungsform des Verfahrens wird der Schweiß- oder Lötvorgang abhängig von der bestimmten Schweiß- oder Lötgeschwindigkeit gesteuert. Durch das Verfahren bzw. das System lässt sich die Schweiß- bzw. Lötgeschwindigkeit zuverlässig bestimmen, so dass diese zur Steuerung eines Schweiß- bzw. Lötprozesses verwendet werden kann. Beispielsweise kann die Leistung abhängig von der berechneten Schweiß- oder Lötgeschwindigkeit eingestellt werden, zum Beispiel um den Energieeintrag in das Werkstück, insbesondere die Streckenenergie Estr, konstant oder innerhalb eines vorgegebenen Bereichs zu halten. Alternativ oder zusätzlich können die Lichtbogenlänge und/oder die Vorschubgeschwindigkeit des Schweißdrahts abhängig von der bestimmten Schweiß- oder Lötgeschwindigkeit gesteuert werden.

Bei einer weiteren Ausführungsform weist das System eine Steuereinrichtung auf, die dazu eingerichtet ist, die Durchführung des zuvor beschriebenen Verfahrens oder einer Ausführungsform davon zu veranlassen. Die Steuereinrichtung kann insbesondere mindestens einen Mikroprozessor und einen damit verbundenen Speicher aufweisen, auf dem Befehle gespeichert sind, deren Ausführung auf dem mindestens einen Mikroprozessor die Durchführung des zuvor beschriebenen Verfahrens oder einer Ausführungsform davon veranlassen.

Bei einer weiteren Ausführungsform des Verfahrens wird bei der Berechnung der Schweiß- oder Lötgeschwindigkeit eine Pendelbewegung des Geräts zum Schweißen oder Löten herausgerechnet. Bei der Herstellung einer Schweißnaht vollführt der Schweißer, während er der zu schweißenden Naht folgt, häufig eine Pendelbewegung in und entgegen der Schweißrichtung, um eine Schuppung der Schweißnaht zu erreichen. Für eine Auswertung oder Steuerung eines Schweißprozesses ist jedoch häufig die effektive Schweißgeschwindigkeit ohne die Pendelbewegung relevant, da diese den lokalen Energieeintrag in die Werkstückoberfläche bestimmt. Das aus einer Folge stereoskopischer Bilder die Lageänderung der Werkstückoberfläche zum Stereokamerasystem bzw. zum Schweißbrenner und folglich eine Trajektorie zwischen Werkstückoberfläche und Schweißbrenner bestimmt werden kann, kann die Pendelbewegung in dieser Trajektorie auf einfache Weise bestimmt und herausgerechnet werden. Durch das Herausrechnen der Pendelbewegung kann ohne weiteres auch die Schweißnahtlänge berechnet werden, sodass bei einer weiteren Ausführungsform des Verfahrens die Schweißnahtlänge ausgewertet wird.

Bei einer weiteren Ausführungsform des Verfahrens wird aus den erfassten stereoskopischen Bildern die Ausrichtung des Geräts zur Werkstückoberfläche bestimmt, wird die bestimmte Ausrichtung des Geräts zur Werkstückoberfläche mit einer vorgegebenen Ausrichtung verglichen und wird abhängig vom Ergebnis des Vergleichs eine Ausgabe ausgegeben. Für eine ordnungsgemäße Schweißnaht ist die korrekte Brennerhaltung zu Werkstückoberfläche erforderlich. Diese kann mit der hier beschriebenen Ausführungsform überprüft werden. Die vorgegebene Ausrichtung kann beispielsweise einen vorgegebenen Winkelbereich zwischen Brenner und Werkstückoberfläche vorgeben. Weicht die bestimmte tatsächliche Ausrichtung des Geräts zu Werkstückoberfläche von der vorgegebenen Ausrichtung ab, so kann beispielsweise eine Warnmeldung an den Nutzer ausgegeben werden. Die Ausgabe kann auch in ein Protokoll erfolgen, das der Dokumentation des Schweißvorgangs dient.

Bei einer weiteren Ausführungsform wird aus den stereoskopischen Bildern eine Pendelbewegung des Geräts bestimmt, wird die bestimmte Pendelbewegung des Geräts mit einer vorgegebenen Pendelbewegung verglichen und abhängig vom Ergebnis des Vergleichs eine Ausgabe ausgegeben. Auf diese Weise kann die Pendelbewegung des Schweißers zur Erzeugung der Schuppung der Schweißnaht ausgewertet und überwacht werden. Beispielsweise kann überwacht werden, ob die Pendelbewegung eine Amplitude in einem vorgegebenen Bereich aufweist. Die Ausgabe kann als Warnmeldung erfolgen, wenn die bestimmte Pendelbewegung von der vorgegebenen Pendelbewegung abweicht, oder in ein Protokoll erfolgen, das der Dokumentation des Schweißvorgangs dient.

Weitere Vorteile und Merkmale des Systems, der Verwendung und des Verfahrens ergeben sich aus der nachfolgenden Beschreibung von Ausführungsbeispielen, wobei auf die beigefügte Zeichnung Bezug genommen wird.

In der Zeichnung zeigen
- Fig. 1: ein Ausführungsbeispiel des Systems zur Bestimmung einer Schweiß- oder Lötgeschwindigkeit,
- Fig. 2a-b: zwei von der Detektionseinrichtung des Systems aus Figur 1 aufgenommene stereoskopische Bilder,
- Fig. 3: die Schweißgeometrie aus Fig. 1 in perspektivischer Ansicht und
- Fig. 4: ein X-t-Diagramm der Schweißbrenner Bewegung.

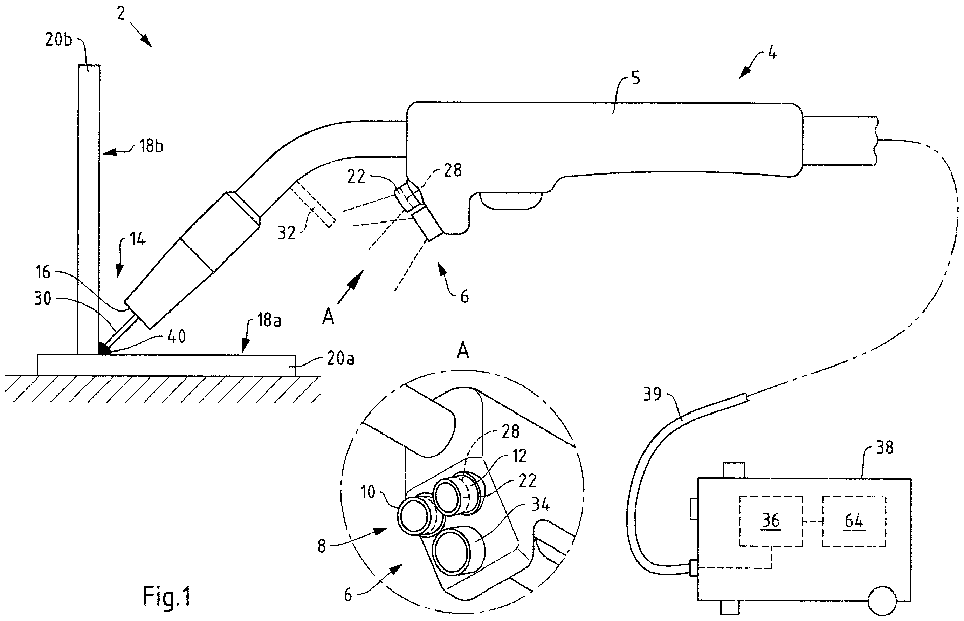

Figur 1 zeigt ein Ausführungsbeispiel des Systems zur Bestimmung einer Schweiß- oder Lötgeschwindigkeit in schematischer Darstellung. Der strichpunktierte und mit "A" bezeichnete Kreis zeigt eine perspektivische Ansicht eines Details in der mit "A" bezeichneten Blickrichtung.

Das System 2 umfasst ein Handgerät 4 in Form eines Schweißbrenners und eine Detektionseinrichtung 6, die im vorliegenden Beispiel in den Griff 5 des Schweißbrenners 4 integriert und damit integral mit dem Schweißbrenner 4 ausgebildet ist. In einem alternativen Ausführungsbeispiel kann die Detektionseinrichtung auch als eigene Einheit ausgebildet sein, die mittels Montagemitteln (nicht dargestellt), wie zum Beispiel einer Verschraubung, an dem Handgerät 4 befestigt ist.

Die Detektionseinrichtung 6 weist ein Stereokamerasystem 8 mit einer ersten Kamera 10 und einer zweiten Kamera 12 auf. Die erste und die zweite Kamera 10, 12 sind leicht versetzt zueinander angeordnet, auf einen Arbeitsbereich 14 vor dem Ende 16 des Schweißbrenners 4 ausgerichtet und miteinander synchronisiert, sodass mit dem Stereokamerasystem 8 stereoskopische Bilder von einer Werkstückoberfläche 18a bzw. 18b eines zu schweißenden Werkstücks 20a bzw. 20b erfasst werden können. Die optischen Achsen der ersten und zweiten Kamera 10, 12 verlaufen vorzugsweise in einem Winkel zueinander, wobei der Schnittpunkt der optischen Achsen vorzugsweise vor der ersten und zweiten Kamera 10, 12 liegt.

Die Kameras 10, 12 weisen weiterhin vorzugsweise eine jeweilige Autofokus-Automatik 22 auf, um die Werkstückoberflächen 18a-b scharf abbilden zu können. Die Autofokus-Automatiken der beiden Kameras 10, 12 können miteinander gekoppelt sein, um die Auswertung der stereoskopischen Bilder zu erleichtern. Alternativ kann auch eine gemeinsame Autofokus-Automatik 22 für beide Kameras 10, 12 vorgesehen sein.

In die erste und die zweite Kamera 10, 12 ist vorzugsweise jeweils ein Wellenlängenfilter 28, zum Beispiel in Form eines Interferenzfilters, integriert, der nur Licht in einem bestimmten Wellenlängenbereich passieren lässt, in dem das Licht eines Schweißlichtbogens 30, der bei einem Schweißvorgang zwischen Schweißbrenner 4 und Werkstück 20a bzw. 20b brennt, ein Intensitätsminimum aufweist. Auf diese Weise kann das intensive Licht des Schweißlichtbogens 30 zu einem großen Teil abgeblockt werden, so dass mit dem Stereokamerasystem 8 qualitativ bessere stereoskopische Bilder aufgenommen werden können, die nicht von dem intensiven Licht des Schweißlichtbogens 30 überstrahlt werden. Zur zusätzlichen oder alternativen Abschirmung des Lichts des Schweißlichtbogens 30 kann weiterhin ein Abschirmelement 32 (in Fig. 1 gestrichtelt dargestellt) so am Schweißbrenner 4 angeordnet sein, dass der direkte Lichteinfall vom Schweißbrenner 4 auf das Stereokamerasystem 8 reduziert wird.

Die Detektionseinrichtung 6 umfasst weiterhin vorzugsweise eine Beleuchtungseinrichtung 34, zum Beispiel in Form einer LED, um den Arbeitsbereich 14 zu beleuchten. Dies ist besonders bei geringen Schweißströmen des Schweißlichtbogens 30 relevant, wenn das Licht des Schweißlichtbogens 30 nicht ausreicht, um den Arbeitsbereich 14 auszuleuchten.

Das System 2 weist weiterhin eine Berechnungseinrichtung 36 auf, die dazu eingerichtet ist, aus den von der von dem Stereokamerasystem 8 erfassten stereoskopischer Bildern eine Schweißgeschwindigkeit zu bestimmen. Im vorliegenden Beispiel ist die Berechnungseinrichtung 36 in eine Schweißstromquelle 38 integriert, mit der der Schweißbrenner 4 über ein Schlauchpaket 39 verbunden ist. In dem Schlauchpaket 39 verläuft insbesondere eine Datenleitung zur Übermittlung der von dem Stereokamerasystem 8 erfassten stereoskopischer Bildern an die Berechnungseinrichtung 36. In einem alternativen Ausführungsbeispiel kann die Berechnungseinrichtung 36 auch unmittelbar in den Schweißbrenner 4 oder in eine daran montierte Komponente integriert sein.

Im Folgenden werden der Betrieb des Systems 2 sowie ein Ausführungsbeispiel des Verfahrens zur Bestimmung einer Schweiß- oder Lötgeschwindigkeit beschrieben.

Figur 1 zeigt das System 2 im Betrieb, und zwar während eines laufenden Schweißvorgangs, bei dem ein Schweißer die Werkstücke 20a-b im Stegstoß mit einer Schweißnaht 40 verschweißt, indem er den Schweißbrenner 4 per Hand am Griff 5 entlang der zu erzeugenden Schweißnaht 40 führt. Die in Fig. 1 dargestellte Schweißgeometrie ist lediglich exemplarisch; das hier beschriebene System 2 und das nachfolgend beschriebene Verfahren eignen sich grundsätzlich auch für beliebige andere Schweißgeometrien.

Während der Schweißer den Schweißbrenner 4 entlang der zu erzeugenden Schweißnaht 40 bewegt, werden von dem Stereokamerasystem 8 in bestimmten Zeitabständen von beispielsweise 0,2s stereoskopische Bilder vom Arbeitsbereich 14, insbesondere von den Werkstückoberflächen 18a-b im Bereich der Schweißnaht 40 erfasst.

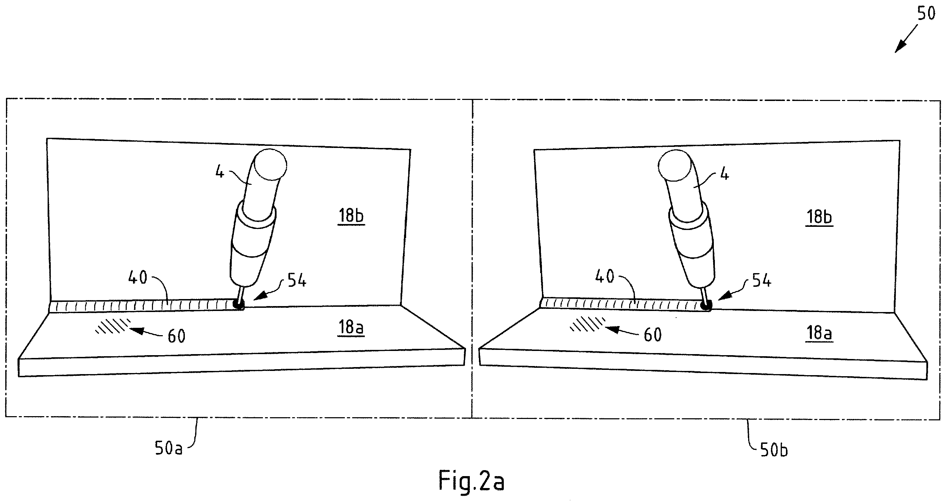

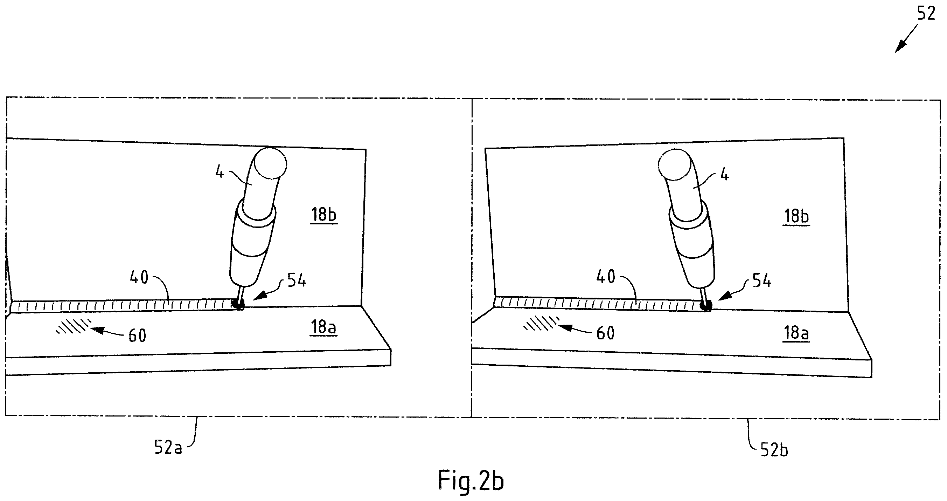

Die Figuren 2a-b zeigen exemplarisch zwei zu zwei verschiedenen Zeitpunkten aufgenommene stereoskopische Bilder 50, 52 in schematischer Darstellung. Die stereoskopischer Bilder 50, 52 umfassen jeweils ein erstes Teilbild 50a bzw. 52a von der ersten Kamera 10 und ein zweites Teilbild 50b bzw. 52b der zweiten Kamera 12. Die Teilbilder eines stereoskopischen Bilds sind jeweils zum gleichen Zeitpunkt, d.h. synchronisiert aufgenommen.

In den einzelnen Teilbildern 50a-b bzw. 52a-b sind die Abbilder der Werkstückoberflächen 18a-b im Arbeitsbereich 14 zu sehen. Weiterhin ist jeweils das Abbild des bereits fertiggestellten Abschnitts der Schweißnaht 40 sowie der aktuellen Position 54 des Schweißlichtbogens 30 an der Schweißnaht 40 zu sehen. Durch die Wellenlängenfilter 28 und/oder das Abschirmelement 32 (in Fig. 2a-b nicht dargestellt) kann das direkte Licht vom Lichtbogen 30 größtenteils abgeblockt werden, so dass es die stereoskopischen Bilder 50, 52 nicht überstrahlt, was deren Auswertung erschweren würde.

Durch die bestimmte Anordnung der ersten und zweiten Kamera 10 und 12 zueinander und durch die Ausrichtung der optischen Achsen der ersten und zweiten Kamera 10, 12 zeigen die Teilbilder 50a-b bzw. 52a-b den Arbeitsbereich 14 aus leicht unterschiedlichen Blickrichtungen. Zudem wurde der Schweißbrenner 4 zwischen dem früher erfassten stereoskopischen Bild 50 und dem etwas später erfassten stereoskopischen Bild 52 weiter entlang der zu erzeugenden Schweißnaht 40 (in Fig. 2a-b nach rechts) bewegt, was sich in dem stereoskopischen Bild 52 einerseits in der verlängerten Schweißnaht 40 und andererseits in der perspektivischen Änderung gegenüber dem stereoskopischer Bild 50 durch die Positionsänderung des Schweißbrenners 4 relativ zu den Werkstücken 20a-b niederschlägt.

Aus den einzelnen stereoskopischen Bildern 50, 52 können durch Verarbeitung der jeweiligen Teilbilder 50a-b bzw. 52a-b mittels bekannter Stereo-Matching-Algorithmen 3D-Koordinaten berechnet werden, die den in den Bildern jeweils dargestellten Objekten, insbesondere den beiden Werkstückoberflächen 18a-b, der Schweißnaht 40 und ggf. der Position 54 des Schweißlichtbogens 30, Koordinaten im Raum zugeordnet werden. Bei einem solchen Stereo-Matching-Algorithmus können insbesondere einander entsprechende Bildbereiche in den zwei Teilbildern eines jeweiligen stereoskopischen Bilds ermittelt und aus deren Position zueinander im Bild (z.B. in 2D-Pixelkoordinaten) und aus der bekannten Geometrie des Stereokamerasystems 8, insbesondere der Anordnung der ersten und zweiten Kamera 10, 12 zueinander und der Richtung derer optischer Achsen, dreidimensionale Koordinaten für die jeweiligen Bildbereiche berechnet werden. Aus dem Abbild der Werkstückoberfläche 18b ergibt sich auf diese Weise zum Beispiel eine Mehrzahl von 3D-Koordinaten für verschiedene Bereiche der Werkstückoberfläche.

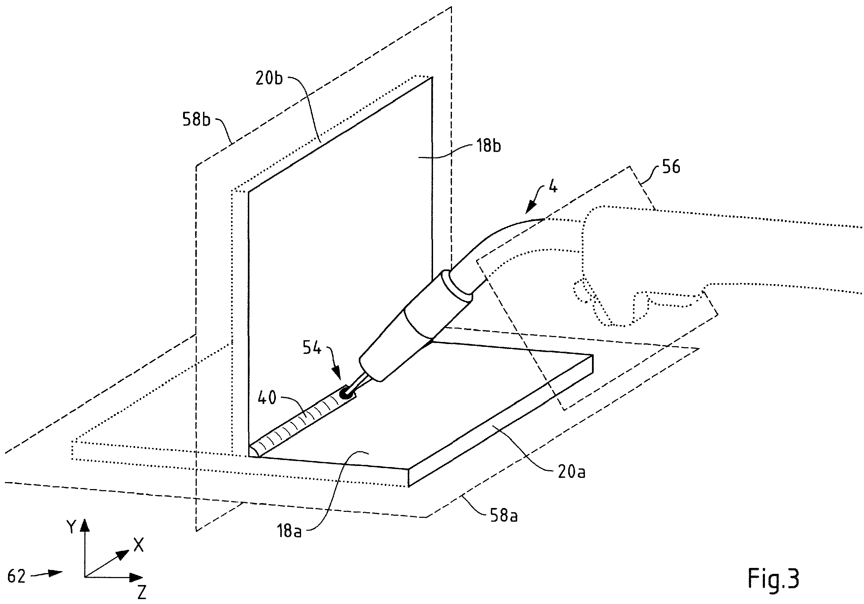

Figur 3 zeigt in perspektivischer Darstellung eine abstrakte Darstellung eines 3D-Modells der Schweißgeometrie, die sich aus den berechneten 3D-Koordinaten ergibt. Die durchgezogenen Linien zeigen die in den stereoskopischen Bildern 50, 52 sichtbaren Objekte, für die wie zuvor beschrieben mehrere 3D-Koordinaten bestimmt wurden. Anstelle der in Fig. 3 schematisch gezeigten Flächen können die Daten der Schweißgeometrie daher insbesondere in Form von 3D-Koordinaten von Punkten der einzelnen Objekte vorliegen. Der besseren Orientierung dienende und in den stereoskopischen Bildern 50,52 nicht sichtbare Elemente sind in Fig. 3 punktiert dargestellt.

Figur 3 zeigt insbesondere auch den Schweißbrenner 4 sowie die Detektionseinrichtung 6, die auf den stereoskopischen Bildern 50, 52 nicht abgebildet ist, deren Position und Ausrichtung (illustriert durch die Kameraebene 56) zur Werkstückoberfläche 18a bzw. 18b in den verwendeten 3D-Koordinaten durch die bekannte Geometrie des Stereokamerasystems 8 jedoch bekannt ist.

Da die beiden Kameras 10, 12 winklig zueinander verlaufen, hat jede Kamera grundsätzlich eine eigene Kameraebene, in der der jeweilige Bildsensor liegt. Anstelle von zwei Kameraebenen kann jedoch wie in Fig. 3 gezeigt auch eine mittlere Kameraebene 56 verwendet werden.

An die aus den stereoskopischen Bildern 50 bzw. 52 erhaltenen 3D-Koordinaten werden fiktive Ebenen 58a-b angefittet, um die Lage der Werkstückoberfläche 18a bzw. 18b im Bereich der Schweißnaht 40 zu erfassen. Dies ermöglicht es, die einzelnen 3D-Koordinaten den jeweiligen Werkstückoberflächen 18a-b zuzuordnen und die Lage der zu verschweißen Werkstücke 20a-b relativ zum Schweißbrenner 4 zu bestimmen.

Mit einem Auswahlalgorithmus werden sodann geeignete Bildbereiche auf den Abbildern der Werkstückoberfläche 18a-b in den stereoskopischen Bildern 50, 52 gesucht. Als geeignete Bereiche kommen insbesondere solche Bereiche infrage, die in beiden Teilbildern eines Stereobilds gut zu unterscheiden ist, wie zum Beispiel Bereiche, an denen die Werkstückoberfläche 18a bzw. 18b eine markante Struktur aufweist, so dass sich diese Bereiche in den einzelnen stereoskopischen Bildern eindeutig wiedererkennen und verfolgen lassen. Die geeigneten Bildbereiche werden vorzugsweise auf den Bildbereichen gesucht, denen die fiktiven Ebenen 58a-b zugeordnet sind, d.h. die zum Abbild der jeweiligen Werkstückoberfläche 18a-b gehören, die durch die fiktiven Ebenen 58a-b repräsentiert werden.

In den Figuren 2a-b ist exemplarisch ein schraffierter Bereich 60 dargestellt, der eine in beiden Teilbildern gut sichtbare Oberflächenstruktur auf der Werkstückoberfläche 18a aufweist und daher zur Bestimmung der Schweißgeschwindigkeit verwendet werden kann.

In den nacheinander aufgenommenen stereoskopischen Bildern 50, 52 wird jeweils der schraffierte Bereich 60 gesucht und dessen Position (in 3D-Koordinaten) relativ zum Schweißbrenner 4 bestimmt.

Aus der Folge der Relativpositionen in den aufeinanderfolgenden stereoskopischen Bildern und dem bekannten Zeitintervall zwischen zwei aufeinanderfolgenden Aufnahmen kann die zeitabhängige Trajektorie zwischen dem Bereich 60 und dem Schweißbrenner 4 und damit die Relativbewegung zwischen Schweißbrenner 4 und den zu schweißenden Werkstückoberflächen 18a-b in 3D-Koordinaten bestimmt werden, woraus sich unmittelbar die Schweißgeschwindigkeit bestimmten lässt.

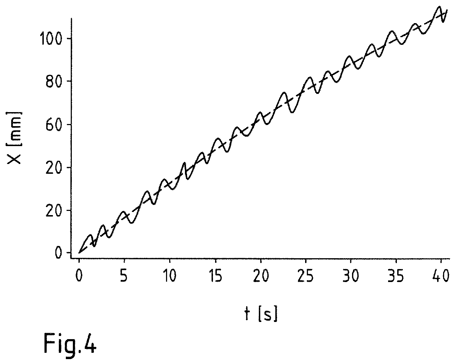

Figur 4 zeigt in einem X-t-Diagramm die Relativbewegung zwischen dem Schweißbrenner 4 und den Werkstückoberflächen 18a-b. Auf der Abszisse ist die Zeit und auf der Ordinate die Position des Schweißbrenners 4 in Bezug auf eine entlang der Schweißnaht 40 verlaufenden Koordinatenachse X eines in Bezug auf die Werkstückoberflächen 18a-b ruhenden Bezugs-Koordinatensystems (s. Bezugszeichen 62 in Fig. 3) aufgetragen. Diese Darstellung ist nur exemplarisch. Bei der Berechnung der Schweißgeschwindigkeit können z.B. auch 3D-Koordinaten eines in Bezug auf den Schweißbrenner 4 ruhenden Koordinatensystems verwendet werden.

Die zeitabhängige Position des Schweißbrenners 4 ist in Fig. 4 als durchgezogene Linie dargestellt. Demnach erfolgt die Bewegung des Schweißbrenners 4 relativ zur Werkstückoberfläche 18a bzw. 18b nicht stetig, sondern in einer Pendelbewegung, bei der der Schweißbrenner 4 in Richtung des Schweißnahtverlaufs vor und zurück bewegt wird. Diese Pendelbewegung ist typisch, um eine Schuppung der Schweißnaht 40 zu erreichen. Aus der Steigung der durchgezogenen Linie ergibt sich die tatsächliche momentane Schweißgeschwindigkeit.

Für die Beurteilung des Schweißvorgangs oder dessen Steuerung ist häufig die effektive Schweißgeschwindigkeit relevant, die den Wärmeeintrag in die Werkstückoberfläche 18a bzw. 18b bestimmt. Daher wird die Pendelbewegung durch die Berechnungseinrichtung 36 vorzugsweise herausgerechnet. Figur 4 zeigt weiterhin als gestrichelte Linie die Bewegung des Schweißbrenners 4, nachdem die Pendelbewegung von der Berechnungseinrichtung 36 herausgerechnet worden ist. Aus der Steigung der gestrichelten Linie ergibt sich die tatsächliche effektive Schweißgeschwindigkeit.

Die bestimmte Schweißgeschwindigkeit oder effektive Schweißgeschwindigkeit können zum Beispiel protokolliert werden, um die durchgeführten Schweißarbeiten zu dokumentieren.

Weiterhin können die bestimmte tatsächliche momentane oder effektive Schweißgeschwindigkeit zur Steuerung der Schweißstromquelle 38 verwendet werden, beispielsweise indem die Länge des Schweißbogens über den Schweißstrom und die Schweißspannung abhängig von der Schweißgeschwindigkeit gesteuert wird. Zu diesem Zweck umfasst das System 2 insbesondere eine entsprechend eingerichtete Steuereinrichtung, beispielsweise die Steuereinrichtung 64 der Schweißstromquelle 38.

Zusätzlich oder alternativ kann die Vorschubgeschwindigkeit eines Schweißdrahts abhängig von der bestimmten Schweißgeschwindigkeit gesteuert werden. Dies kann zum Beispiel ebenfalls über die Steuereinrichtung 64 der Schweißstromquelle und/oder auch über die Steuereinrichtung eines Drahtvorschubkoffers (nicht dargestellt) erfolgen.

## Patentansprüche

1. System (2) zur Bestimmung einer Schweiß- oder Lötgeschwindigkeit,
- mit einer Detektionseinrichtung (6), eingerichtet zur Montage an oder zur Integration in ein Gerät (4), insbesondere Handgerät, zum Schweißen oder Löten,
- wobei die Detektionseinrichtung (6) ein Stereokamerasystem (8) umfasst, das zum Erfassen stereoskopischer Bilder (50, 52) von einer Werkstückoberfläche (18a-b) eingerichtet ist, und
- mit einer Berechnungseinrichtung (26), die dazu eingerichtet ist, aus den erfassten stereoskopischen Bildern (50, 52) eine Schweiß- oder Lötgeschwindigkeit zu bestimmen.

2. System nach Anspruch 1,
**dadurch gekennzeichnet, dass** die Berechnungseinrichtung (36) zur Bestimmung der Schweiß- oder Lötgeschwindigkeit dazu eingerichtet ist,
- 3D-Koordinaten aus den stereoskopischen Bildern (50, 52) zu berechnen,
- die Lage der Werkstückoberfläche (18a-b) zum Stereokamerasystem (8) aus den 3D-Koordinaten zu bestimmen und
- die Schweiß- oder Lötgeschwindigkeit abhängig von der Änderung der bestimmten Lage der Werkstückoberfläche (18a-b) zu berechnen.

3. System nach Anspruch 1 oder 2,
**dadurch gekennzeichnet, dass** die Detektionseinrichtung (6) eine Beleuchtungseinrichtung (34) aufweist, die zur Beleuchtung einer Werkstückoberfläche (18a-b) mit Licht eingerichtet ist.

4. System nach einem der Ansprüche 1 bis 3,
**dadurch gekennzeichnet, dass** die Detektionseinrichtung (6) einen vor dem Stereokamerasystem (8) angeordneten oder in das Stereokamerasystem (8) integrierten Wellenlängenfilter (28) aufweist, insbesondere einen Interferenzfilter.

5. System nach einem der Ansprüche 1 bis 4,
**dadurch gekennzeichnet, dass** die Berechnungseinrichtung (36) dazu eingerichtet ist, aus den erfassten stereoskopischen Bildern (50, 52) einen Abstand zu einer Werkstückoberfläche (18a-b) zu bestimmen, dass das Stereokamerasystem (8) eine Autofokus-Automatik (22) aufweist und dass die Autofokus-Automatik (22) dazu eingerichtet ist, den Fokus abhängig vom bestimmten Abstand einzustellen.

6. System nach einem der Ansprüche 1 bis 5,
weiter umfassend ein Gerät (4), insbesondere Handgerät, zum Schweißen oder Löten, wobei die Detektionseinrichtung an dem Gerät montiert oder in dieses integriert ist.

7. System nach einem der Ansprüche 1 bis 6,
umfassend eine Steuereinrichtung (64), die zur Steuerung eines Schweiß- oder Lötvorgangs abhängig von der bestimmten Schweiß- oder Lötgeschwindigkeit eingerichtet ist.

8. System nach einem der Ansprüche 1 bis 7,
umfassend eine Steuereinrichtung (64), die dazu eingerichtet ist, die Durchführung eines Verfahrens nach einem der Ansprüche 10 bis 15 zu veranlassen.

9. Verwendung eines Systems (2) nach einem der Ansprüche 1 bis 8 zum Bestimmen einer Schweiß- oder Lötgeschwindigkeit.

10. Verfahren zur Bestimmung einer Schweiß- oder Lötgeschwindigkeit, insbesondere unter Verwendung eines Systems (2) nach einem der Ansprüche 1 bis 8,
- bei dem, während mit einem Gerät (4) zum Schweißen oder Löten ein Schweiß- oder Lötvorgang an einem Werkstück (20a-b) durchgeführt wird, von einem ortsfest zum Gerät (4) zum Schweißen oder Löten angeordneten Stereokamerasystem (8) stereoskopische Bilder (50, 52) von einer Werkstückoberfläche (18a-b) des Werkstücks (20a-b) erfasst werden und
- bei dem aus den erfassten stereoskopischen Bildern (50, 52) eine Schweiß- oder Lötgeschwindigkeit berechnet wird.

11. Verfahren nach Anspruch 10,
- bei dem das Berechnen der Schweiß- oder Lötgeschwindigkeit aus den erfassten stereoskopischen Bildern (50, 52) folgende Schritte umfasst:
- Berechnen von 3D-Koordinaten aus den stereoskopischen Bildern (50, 52),
- Bestimmen der Lage der Werkstückoberfläche (18a-b) zum Stereokamerasystem (8) aus den 3D-Koordinaten und
- Berechnung der Schweiß- oder Lötgeschwindigkeit abhängig von der bestimmten Lage der Werkstückoberfläche (18a-b).

12. Verfahren nach Anspruch 10 oder 11,
- bei dem bei der Berechnung der Schweiß- oder Lötgeschwindigkeit eine Pendelbewegung des Geräts (4) zum Schweißen oder Löten herausgerechnet wird.

13. Verfahren nach einem der Ansprüche 10 bis 12,
- bei dem aus den erfassten stereoskopischen Bildern die Ausrichtung des Geräts (4) zur Werkstückoberfläche (18a-b) bestimmt wird,
- bei dem die bestimmte Ausrichtung des Geräts (4) zur Werkstückoberfläche (18a-b) mit einer vorgegebenen Ausrichtung verglichen wird und
- bei dem abhängig vom Ergebnis des Vergleichs eine Ausgabe ausgegeben wird.

14. Verfahren nach einem der Ansprüche 10 bis 13,
- bei dem aus den stereoskopischen Bildern (50, 52) eine Pendelbewegung des Geräts (4) bestimmt wird,
- bei dem die bestimmte Pendelbewegung des Geräts (4) mit einer vorgegebenen Pendelbewegung verglichen wird und
- bei dem abhängig vom Ergebnis des Vergleichs eine Ausgabe ausgegeben wird.

15. Verfahren nach einem der Ansprüche 10 bis 14,
**dadurch gekennzeichnet, dass** Schweiß- oder Lötvorgang abhängig von der bestimmten Schweiß- oder Lötgeschwindigkeit gesteuert wird.
